# FASCICULE DE BREVET EUROPEEN

(11) **EP 4 093 641 B1**
(45) Date de publication et mention de la délivrance du brevet: **10.01.2024**
(21) Numéro de dépôt: 20821022.9
(22) Date de dépôt: 14.12.2020
(51) Int. Cl.: B60S 1/48, B60S 1/56, F16K 11/22, F16K 15/06, B05B 1/30

(54) **SYSTEME DE PROJECTION DE LIQUIDE**
FLÜSSIGKEITSSPRÜHSYSTEM
LIQUID SPRAYING SYSTEM

(30) Priorité: 20.01.2020 FR 2000822
(43) Date de publication de la demande: 30.11.2022
(73) Titulaire: Valeo Systèmes d'Essuyage, 78322 Le Mesnil Saint Denis (FR)
(72) Inventeur: BAUDOUIN, Maxime, 78322 LE MESNIL SAINT DENIS (FR); JULLIEN, Theophile, 78322 LE MESNIL SAINT DENIS (FR)
(74) Mandataire: Valeo Visibility
(86) Numéro de dépôt international: PCT/EP2020/085933
(87) Numéro de publication internationale: WO 2021/151573

(56) Documents cités:
- WO-A1-2018/188951
- WO-A1-2019/226763
- US-B2- 9 927 035
- US-B2- 10 272 886

## Description

### Domaine technique

La présente invention concerne le domaine des systèmes de projection de liquide pour véhicules automobiles.

### Technique antérieure

Les véhicules automobiles possèdent tous un système de projection de liquide de nettoyage pour maintenir le pare-brise du véhicule propre et permettre une vision optimale du conducteur vers l'extérieur.

De plus, avec la multiplication des capteurs et notamment des capteurs optiques d'assistance à la conduite, le nombre de systèmes de projection se multiplie pour permettre le bon fonctionnement de ces capteurs optiques qui sont généralement exposés aux salissures de l'environnement externe.

Afin d'éviter de multiplier le nombre de composants, il est connu de mutualiser certains composants des systèmes de projection comme la pompe ou le réservoir entre les différents systèmes de projection. Des vannes sont alors utilisées pour diriger et transmettre le liquide de nettoyage pompé vers les embouts de projection (ou gicleurs) sélectionnés.

Cependant, de telles configurations requiert une pompe plus puissante et un niveau de pression plus élevé, par exemple supérieur à 6 bars, par rapport aux systèmes de nettoyage « classiques » pour le pare-brise seul.

Or, un tel niveau de pression peut créer des risques d'endommagement pour le matériel ainsi que des risques pour la sécurité des usagers.

Il convient donc de pouvoir contrôler la pression maximale dans le circuit hydraulique du système de projection pour permettre d'utiliser des composants moins chers et éviter de tels risques.

Le document US 9 927 035 B2 divulgue un système de projection d'un liquide de lavage comprenant :
- au moins une vanne, ladite au moins une vanne étant destinée à être couplée à un réservoir et respectivement à au moins un organe de projection, et configurée pour transmettre sélectivement un liquide de lavage pompé par une pompe dudit réservoir vers l'au moins un organe de projection respectif, dans lequel l'au moins une vanne est disposée sous la forme d'un bloc de distribution avec une entrée du bloc configurée pour être reliée fluidiquement à la pompe et comprenant des connecteurs fluidiques disposés en parallèle et destinés à être raccordés à l'au moins un organe de projection.

### Exposé de l'invention

A cet effet, il est proposé un système de projection d'un liquide de lavage comprenant :
- un réservoir d'un liquide de lavage,
- au moins un organe de projection relié fluidiquement au réservoir,
- une pompe configurée pour alimenter l'au moins un organe de projection en liquide de lavage,
- au moins une vanne couplée respectivement à l'au moins un organe de projection et configurées pour transmettre sélectivement le liquide de lavage pompé par une pompe vers l'au moins un organe de projection respectif, dans lequel l'au moins une vanne est disposée sous la forme d'un bloc de distribution avec une entrée du bloc configurée pour être reliée fluidiquement à la pompe et comprenant des connecteurs fluidiques disposés en parallèle et destinés à être raccordés à l'au moins un organe de projection et dans lequel le bloc de distribution comprend également une valve de surpression mécanique disposée en parallèle des connecteurs fluidiques et configurée pour s'adapter sur un connecteur fluidiques du bloc de distribution.

L'utilisation d'une valve de surpression au niveau du bloc de distribution permet de limiter la pression dans le système de projection ce qui permet d'utiliser des éléments moins robustes et donc moins chers tout en assurant la protection des usagers. De plus, la disposition au niveau d'un bloc de distribution permet une grande modularité, un faible encombrement et un entretien simplifié.

Selon un mode de réalisation, il y a une pluralité d'organes de projection et une pluralité de vannes couplées respectivement à ladite pluralité d'organes de projection.

Selon un mode de réalisation, la valve de surpression mécanique comprend une interface 1/4 de tour en entrée.

Selon un autre mode de réalisation, la valve de surpression comprend un bec de sortie configuré pour être connectée fluidiquement à une durite de retour vers le réservoir.

Selon un autre mode de réalisation, la valve de surpression comprend un ensemble joint-bille - ressort configuré pour que la bille s'écarte du joint lorsque la pression dépasse une valeur prédéterminée.

Selon un autre mode de réalisation, la valve de surpression comprend également une vis ou un écrou de précontrainte du ressort configurée pour régler la valeur prédéterminée.

Selon un autre mode de réalisation, la valeur prédéterminée est comprise entre 5 et 6 bars.

Selon un autre mode de réalisation, la valve de surpression comprend un carter en matière plastique.

Selon un autre mode de réalisation, les vannes sont des électrovannes.

Selon un autre mode de réalisation, le bloc de distribution est un bloc modulaire dans lequel le nombre de vannes peut être adapté en fonction du nombre d'organe de projection à alimenter.

Selon un autre mode de réalisation, les connecteurs fluidiques sont des connecteurs standard.

### Brève description des dessins

D'autres caractéristiques et avantages de l'invention apparaîtront plus clairement à la lecture de la description suivante, donnée à titre d'exemple illustratif et non limitatif et des dessins annexés parmi lesquels :
[Fig.1] représente un schéma d'un système de projection d'un liquide de lavage;
[Fig.2] représente une vue en coupe longitudinale d'une valve de surpression;
[Fig.3] représente une première vue en perspective d'une valve de surpression;
[Fig.4] représente une deuxième vue en perspective d'une valve de surpression;
[Fig.5] représente une troisième vue en perspective d'une valve de surpression;
[Fig.6] représente une quatrième vue en perspective d'une valve de surpression;
[Fig.7] représente un schéma d'un bloc de distribution.

Dans ces figures, les éléments identiques portent les mêmes références.

### Description détaillée

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

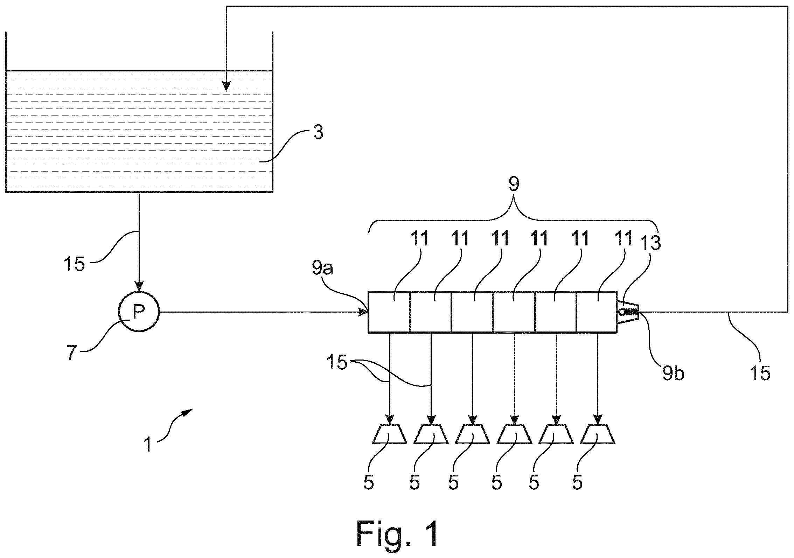

Des modes de mise en oeuvre et de réalisation de l'invention concernent un système de projection d'un liquide de lavage 1, notamment pour véhicules automobiles, représenté schématiquement sur la figure 1. Le système de projection 1 comprend un réservoir 3 de liquide de lavage, une pluralité d'organes de projection 5 (six dans le cas présent), par exemple des buses de projection, une pompe 7 et un bloc de distribution 9 comprenant une pluralité de vannes 11 (six dans le cas présent) et une valve de surpression mécanique 13. Les différents éléments du système de projection 1 sont reliées fluidiquement par exemple par des tuyaux ou durites 15. Les flèches au niveau des tuyaux 15 indiquent le sens d'écoulement du liquide de lavage.

La pompe 7 est configurée pour pomper le liquide de lavage du réservoir 3 et l'envoyer vers le bloc de distribution 9 et les organes de projection 5. Les vannes 11 du bloc de distribution 9 sont configurées pour être reliées fluidiquement respectivement aux différents organes de projection 5. Les vannes 11 sont configurées pour transmettre sélectivement le liquide de lavage pompé vers les organes de projection 5 associés. Les vannes 11 sont par exemple des électrovannes. Les vannes 11 sont disposées en parallèle, c'est-à-dire qu'elles sont toutes reliée à un canal fluidique du bloc de distribution 9. Ce canal fluidique est relié à une entrée 9a du bloc de distribution 9 connectée à la pompe 7 et à une sortie 9b du bloc de distribution 9 reliée au réservoir 3. La valve de surpression 13 est par exemple disposée au niveau de la sortie 9b du bloc de distribution 9.

Ainsi, en fonctionnement, l'activation de la pompe 7 permet de transmettre le liquide de lavage du réservoir 3 vers le bloc de distribution 9 et vers les organes de projection 5 dont la vanne 11 associée est ouverte. De plus, lorsque la pression du liquide de lavage dans le bloc de distribution 9 dépasse une valeur prédéfinie, la valve de surpression 13 est configurée pour permettre le retour du liquide vers le réservoir 3 et ainsi limiter la pression dans le système de projection 1 et notamment dans le bloc de distribution 9 et dans les durites 15. Cette limitation de la pression permet de limiter les risques de rupture des différents éléments, d'utiliser des éléments moins chers et plus légers tout en assurant la sécurité des passagers du véhicule dans le cas d'un système de projection d'un véhicule automobile.

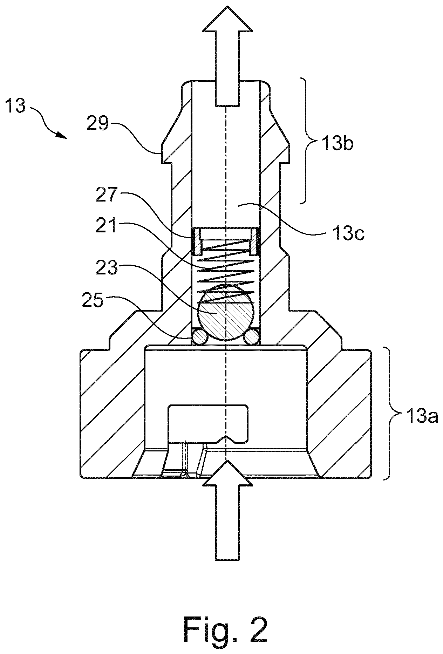

La figure 2 montre une vue en coupe longitudinale d'une valve de surpression 13 mécanique comprenant un élément élastique 21, ici un ressort hélicoïdal, configuré pour contraindre une bille 23 contre un joint 25, par exemple un joint torique. La raideur du ressort 21 peut être choisie en fonction de la valeur de pression prédéfinie. De plus, le ressort 21 peut être en appui sur une butée réglable 27, par exemple une vis ou un écrou de précontrainte, permettant d'appliquer une précontrainte sur le ressort hélicoïdal 21 de manière à pouvoir régler la valeur de pression prédéfinie. La valeur prédéfinie est par exemple comprise entre 5 et 6 bars.

La valve de surpression 13 comprend également une entrée 13a en communication fluidique avec une sortie 13b de la valve 13 et un canal fluidique 13c reliant l'entrée 13a à la sortie 13b et dans lequel est disposée la bille 23. Les flèches au niveau de l'entrée 13a et de la sortie 13b indique le sens découlement du liquide. Ainsi, en fonctionnement, tant que la pression du fluide est inférieure à la valeur prédéfinie, le liquide de lavage est stoppé par la bille 23 qui est en contact avec le joint torique 25. Lorsque la pression du liquide sur la bille 23 dépasse la valeur prédéfinie, la bille 23 comprime le ressort 21 de sorte qu'un espace se forme entre la bille 23 et le joint torique 25, laissant ainsi passer le liquide de lavage. Si la pression redescend en dessous de la valeur prédéfinie, la bille 23 est replacée contre le joint torique 25 sous l'effet du ressort 21 de sorte que la bille 23 bloque le passage du liquide de lavage. Cette combinaison bille 23-ressort 21 permet d'obtenir une incertitude d'environ +/-5 % sur la valeur prédéfinie.

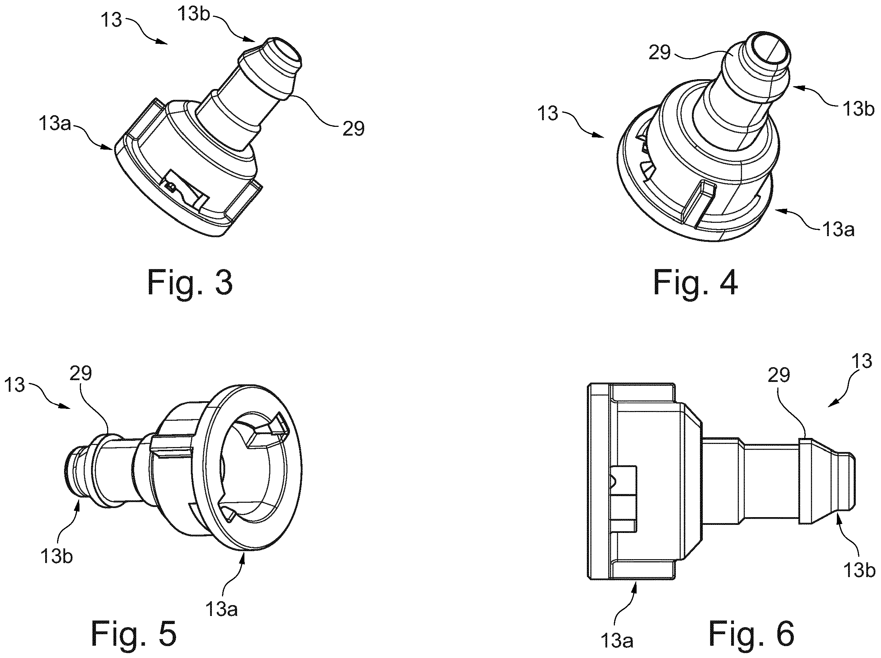

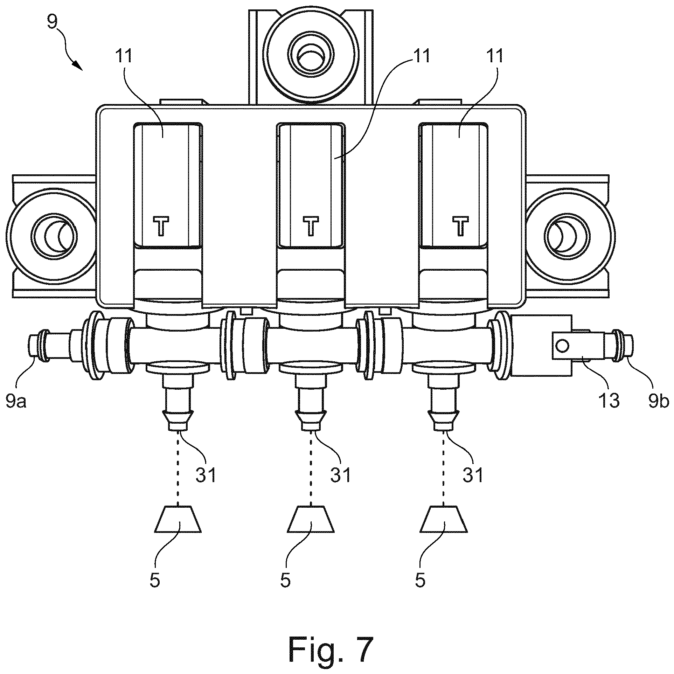

De plus, comme mieux visible sur les figures 3 à 6, la valve de surpression 13 peut comprendre une interface 1/4 de tour au niveau de l'entrée 13a de manière à pouvoir être fixée aisément et rapidement sur un embout complémentaire du bloc de distribution 9 correspondant à un connecteur fluidique 31 (visible sur la figure 7). Un joint (non représenté), par exemple de type conique, peut également être disposé au niveau de l'entrée 13a pour assurer l'étanchéité de l'interface à l'embout complémentaire. La valve de surpression 13 peut également comprendre un bec avec une collerette 29 et une forme rétrécie vers son extrémité au niveau de sa sortie pour permettre la fixation d'une durite ou d'un tuyau 15. La forme du bec correspond également à la forme d'un connecteur fluidique 31 de sorte que la valve de surpression peut être insérer entre un connecteur fluidique 31 et un tuyau 15. Le carter de la valve de surpression 13 peut être réalisé en un seul bloc et peut être réalisé en matière plastique.

La figure 7 représente un exemple de réalisation d'un bloc de distribution 9 comprenant trois électrovannes 11 disposées en parallèle et associées respectivement à trois connecteurs fluidiques 31 destinés à être reliés à des organes de projection 5. Les électrovannes 11 sont disposées le long d'un canal fluidique reliant l'entrée 9a et la sortie 9b du bloc de distribution 9. Une valve de surpression 13 telle que décrite précédemment est également disposée au niveau de la sortie 9b du bloc de distribution 9. La valve de surpression 13 est configurée pour venir s'adapter sur un connecteur fluidique 31 standard du bloc de distribution 9. Cependant, il est à noter que la valve de surpression 13 peut également être disposée à un autre emplacement, par exemple à la place de l'un des connecteurs fluidiques 31, la sortie 13b de la vanne de surpression 13 étant toujours en connexion fluidique avec le réservoir 3. Le bloc de distribution 9 est un bloc modulaire de sorte que le nombre d'électrovannes 11 peut être facilement modifié pour s'adapter au nombre d'organes de projection 5 par exemple en fonction du modèle du véhicule automobile si le système de projection 1 est disposé sur un véhicule automobile. Différents blocs de distribution 9 peuvent également être combinés. Dans ce cas, la valve de surpression 13 peut être disposée à la sortie commune de l'ensemble des blocs de distribution 9. Les connecteurs fluidiques 31 du bloc de distribution 9 sont par exemple des connecteurs standards. Ainsi, l'utilisation d'un bloc de distribution modulaire permet d'ajuster la taille du bloc de distribution en fonction du nombre d'organes de projection à alimenter et l'utilisation de connecteurs fluidiques standard permet la connexion de durites ou tuyaux 15 ainsi que d'une valve de surpression. La valve de surpression permet d'assurer que la pression dans le système de projection ne dépasse pas une valeur seuil ce qui permet d'assurer la sécurité des utilisateurs tout en permettant d'utiliser des équipements qui ne nécessitent une résistance à une pression supérieure à la valeur seuil ce qui permet d'utiliser des équipements ayant un coût réduit.

## Revendications

1. Système de projection (1) d'un liquide de lavage comprenant :
- au moins une vanne (11), ladite au moins une vanne (11) étant destinée à être couplée à un réservoir (3) et respectivement à au moins un organe de projection (5), et configurée pour transmettre sélectivement un liquide de lavage pompé par une pompe (7) dudit réservoir (3) vers l'au moins un organe de projection (5) respectif, dans lequel l'au moins une vanne (11) est disposée sous la forme d'un bloc de distribution (9) avec une entrée (9a) du bloc configurée pour être reliée fluidiquement à la pompe (7) et comprenant des connecteurs fluidiques (31) disposés en parallèle et destinés à être raccordés à l'au moins un organe de projection (5), **caractérisé en ce que** le bloc de distribution (9) comprend également une valve de surpression mécanique (13) disposée en parallèle des connecteurs fluidiques (31) et configurée pour s'adapter sur l'un des connecteur fluidiques (31) du bloc de distribution (9).

2. Système de projection (1) selon la revendication 1 dans lequel il y a une pluralité d'organes de projection (5), une pluralité de vannes (11) couplées respectivement à ladite pluralité d'organes de projection (5).

3. Système de projection (1) selon la revendication 1 ou 2 dans lequel la valve de surpression mécanique (13) comprend une interface 1/4 de tour en entrée.

4. Système de projection (1) selon l'une des revendications précédentes dans lequel la valve de surpression (13) comprend un bec de sortie configuré pour être connectée fluidiquement à une durite (15) de retour vers le réservoir (3).

5. Système de projection (1) selon l'une des revendications précédentes dans lequel la valve de surpression (13) comprend un ensemble joint (25)-bille (23)-ressort (21) configuré pour que la bille (23) s'écarte du joint (25) lorsque la pression dépasse une valeur prédéterminée.

6. Système de projection (1) selon la revendication 4 dans lequel la valve de surpression comprend également une vis ou un écrou de précontrainte (27) du ressort (21) configurée pour régler la valeur prédéterminée.

7. Système de projection (1) selon la revendication 5 ou 6 dans lequel la valeur prédéterminée est comprise entre 5 et 6 bars.

8. Système de projection (1) selon l'une des revendications précédentes dans lequel la valve de surpression (13) comprend un carter en matière plastique.

9. Système de projection (1) selon l'une des revendications précédentes dans lequel les vannes (11) sont des électrovannes.

10. Système de projection (1) selon l'une des revendications précédentes dans lequel le bloc de distribution (9) est un bloc modulaire dans lequel le nombre de vannes (11) peut être adapté en fonction du nombre d'organe de projection (5) à alimenter.

11. Système de projection (1) selon l'une des revendications précédentes dans lequel les connecteurs fluidiques (31) sont des connecteurs standard.

## Patentansprüche

1. Spritzsystem (1) für eine Waschflüssigkeit, umfassend:
- wenigstens ein Ventil (11), wobei das wenigstens eine Ventil (11) dazu bestimmt ist, an einen Vorratsbehälter (3) und jeweils wenigstens ein Spritzorgan (5) gekoppelt zu sein, und dazu ausgebildet ist, selektiv eine Waschflüssigkeit zu übertragen, die von einer Pumpe (7) vom Vorratsbehälter (3) zum wenigstens einen jeweiligen Spritzorgan (5) gepumpt wird, wobei das wenigstens eine Ventil (11) in Form eines Verteilerblocks (9) angeordnet ist, mit einem Einlass (9a) des Blocks, der dazu ausgebildet ist, fluidisch mit der Pumpe (7) verbunden zu sein, und Fluidkonnektoren (31) umfasst, die parallel angeordnet und dazu bestimmt sind, an das wenigstens eine Spritzorgan (5) angeschlossen zu sein, **dadurch gekennzeichnet, dass** der Verteilerblock (9) ebenfalls ein mechanisches Überdruckventil (13) umfasst, das parallel zu den Fluidkonnektoren (31) angeordnet ist und dazu ausgebildet ist, auf einen der Fluidkonnektoren (31) des Verteilerblocks (9) zu passen.

2. Spritzsystem (1) nach Anspruch 1, wobei eine Mehrzahl von Spritzorganen (5) vorhanden ist, wobei eine Mehrzahl von Ventilen (11) jeweils an die Mehrzahl von Spritzorganen (5) gekoppelt ist.

3. Spritzsystem (1) nach Anspruch 1 oder 2, wobei das mechanische Überdruckventil (13) am Einlass einen Anschluss mit 1/4-Drehung umfasst.

4. Spritzsystem (1) nach einem der vorhergehenden Ansprüche, wobei das Überdruckventil (13) einen Auslassstutzen umfasst, der dazu ausgebildet ist, fluidisch mit einer Rücklaufleitung (15) zum Vorratsbehälter (3) verbunden zu sein.

5. Spritzsystem (1) nach einem der vorhergehenden Ansprüche, wobei das Überdruckventil (13) eine Kugel-(23) Feder- (21) -Dichtungsanordnung (25) umfasst, die dazu ausgebildet ist, dass sich die Kugel (23) von der Dichtung (25) entfernt, wenn der Druck einen vorbestimmten Wert überschreitet.

6. Spritzsystem (1) nach Anspruch 4, wobei das Überdruckventil ebenfalls eine Schraube oder Mutter zum Vorspannen (27) der Feder (21) umfasst, die dazu ausgebildet ist, den vorbestimmten Wert einzustellen.

7. Spritzsystem (1) nach Anspruch 5 oder 6, wobei der vorbestimmte Wert zwischen 5 und 6 bar liegt.

8. Spritzsystem (1) nach einem der vorhergehenden Ansprüche, wobei das Überdruckventil (13) ein Gehäuse aus Kunststoff umfasst.

9. Spritzsystem (1) nach einem der vorhergehenden Ansprüche, wobei die Ventile (11) Magnetventile sind.

10. Spritzsystem (1) nach einem der vorhergehenden Ansprüche, wobei der Verteilerblock (9) ein modularer Block ist, bei dem die Anzahl von Ventilen (11) je nach der Anzahl von zu versorgenden Spritzorganen (5) angepasst werden kann.

11. Spritzsystem (1) nach einem der vorhergehenden Ansprüche, wobei die Fluidkonnektoren (31) Standardkonnektoren sind.

## Claims

1. System (1) for spraying a washing liquid, comprising:
- at least one valve (11), said at least one valve (11) being intended to be coupled to a tank (3) and, respectively, to at least one spray member (5), and being configured to selectively transmit a washing liquid pumped by a pump (7) from said tank (3) to the at least one respective spray member (5),
wherein the at least one valve (11) is disposed in the form of a distribution block (9) with an inlet (9a) of the block being configured to be fluidically connected to the pump (7) and comprising fluidic connectors (31) disposed in parallel and intended to be connected to the at least one spray member (5), **characterised in that** the distribution block (9) also comprises a mechanical overpressure valve (13) disposed in parallel with the fluidic connectors (31) and configured to be fitted on one of the fluidic connectors (31) of the distribution block (9).

2. Spraying system (1) according to Claim 1, wherein there are a plurality of spray members (5), and a plurality of valves (11) coupled respectively to said plurality of spray members (5).

3. Spraying system (1) according to Claim 1 or 2, wherein the mechanical overpressure valve (13) comprises a 1/4 turn interface at its inlet.

4. Spraying system (1) according to one of the preceding claims, wherein the overpressure valve (13) comprises an outlet nose configured to be fluidically connected to a return hose (15) in the direction of the tank (3).

5. Spraying system (1) according to one of the preceding claims, wherein the overpressure valve (13) comprises a seal (25)-ball (23)-spring (21) assembly configured such that the ball (23) moves away from the seal (25) when the pressure exceeds a predetermined value.

6. Spraying system (1) according to Claim 4, wherein the overpressure valve also comprises a screw or a preloading nut (27) for the spring (21), configured to adjust the predetermined value.

7. Spraying system (1) according to Claim 5 or 6, wherein the predetermined value is between 5 and 6 bar.

8. Spraying system (1) according to one of the preceding claims, wherein the overpressure valve (13) comprises a casing made of plastics material.

9. Spraying system (1) according to one of the preceding claims, wherein the valves (11) are solenoid valves.

10. Spraying system (1) according to one of the preceding claims, wherein the distribution block (9) is a modular block in which the number of valves (11) can be adapted depending on the number of spray members (5) to be supplied.

11. Spraying system (1) according to one of the preceding claims, wherein the fluidic connectors (31) are standard connectors.
